# EUROPEAN PATENT APPLICATION

(11) **EP 2 101 110 A1**
(43) Date of publication of application: **16.09.2009**
(21) Application number: 08425202.2
(22) Date of filing: 28.03.2008
(51) Int. Cl.: F24C 5/20, A47J 36/26, F24C 3/14

(54) **Cooking appliance**

(30) Priority: 10.03.2008 IT BS20080047
(71) Applicant: Bellini, Fabio, 25010 San Felice del Benaco (BS) (IT)
(72) Inventor: Bellini, Fabio, 25010 San Felice del Benaco (BS) (IT)
(74) Representative: Pulieri, Gianluca Antonio

(57) **Abstract**

The invention relates to a cooking appliance, comprising a body-shell, having an upper side, which forms the top of the cooking appliance and which bears a cooking hob, a housing seat for a fuel charge, made inside the body-shell, below and distanced from the upper side of the cooking appliance; and a burner placed between the seat and cooking hob.

The burner comprises a plate-shaped element positioned between the upper side of the cooking appliance and the seat for the fuel charge so as to form an air-fuel mixing chamber above the exposed surface of the charge, and a conductor pipe of the flame, which extends in height from the plate-shaped element as far as the cooking hob.

In addition, the upper side of the cooking appliance has an aperture which surrounds the outlet of the pipe of the burner so as to define with it a main entry passage for the air feeding the mixing chamber.

## Description

The present invention relates to a cooking appliance, especially suitable for use in moving vehicles such as boats or camper vans, as a camping stove or for similar purposes.

The cooking appliances suitable for these applications are characterised mainly by being utilisable in an autonomous manner, without the need to be connected to external fuel supplies.

In addition, they should be safe, manageable, easy to use and, if possible, also have a reasonably long operating autonomy.

The most widespread cooking appliances for these types of application are those which work using gas cylinders. Such cooking appliances however require specific precautions in terms of safety, both as regards their construction and during use, and, if the cylinder is of reduced capacity, for example in line with the reduced size of the cooking appliance, their operating autonomy is extremely limited.

Recently, fuels in the form of a gelatinous, alcohol-based paste have been put on the market, such as bio-ethanol. The patent application WO 2004/0165514 describes examples of this type of fuel, which can even be conveniently packaged in tubs. The advantage of this fuel is mainly connected with its ease of use and safety, combined with a considerable operating autonomy.

However, an efficient method for using these new types of fuel with the cooking appliances above has not yet been found.

The purpose of the present invention is to devise and make available a cooking appliance, specifically for use in moving vehicles, which makes it possible to fully exploit fuel in the form of charges of the type described above.

Such purpose is achieved by a cooking appliance according to claim 1.

Further characteristics and advantages of the cooking appliance according to the invention will be evident from the description below, made by way of an indicative and non-limiting example of its preferred embodiments, with reference to the attached figures wherein:

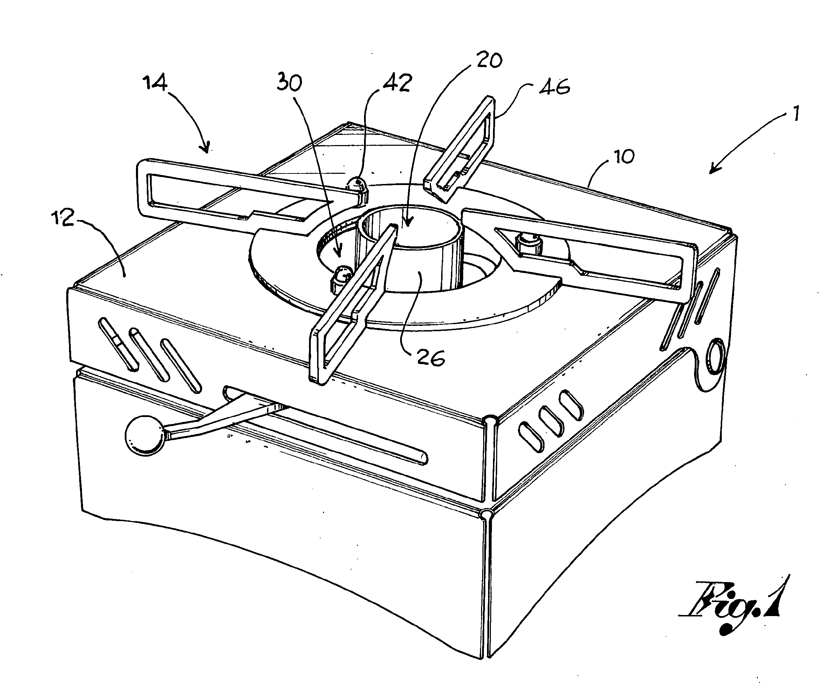

- figure 1 shows a perspective cross-section view of a cooking appliance according to the invention;

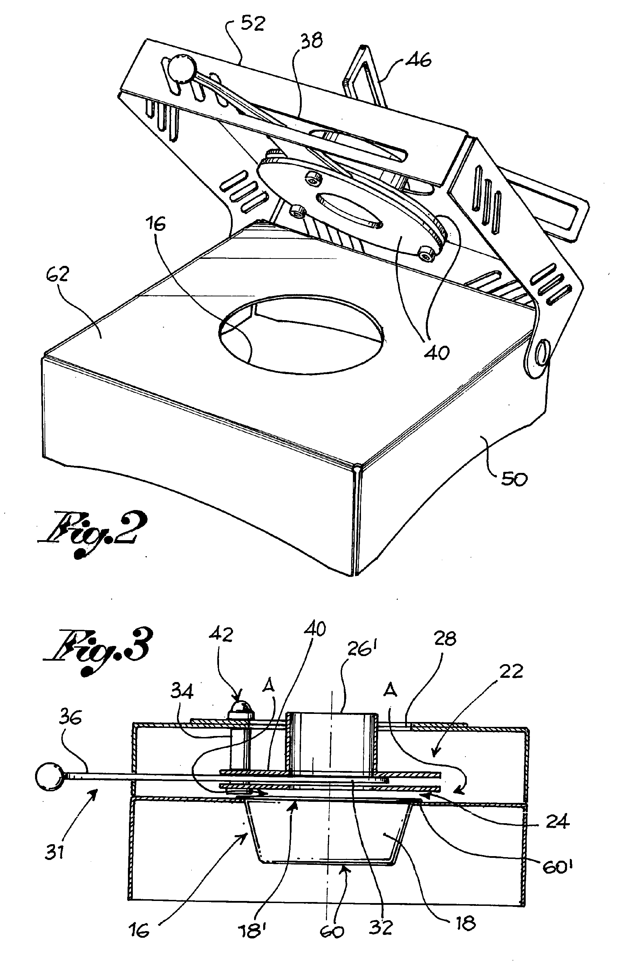

- figure 2 shows the cooking appliance open so as to access the fuel charge; and

- figure 3 shows the cooking appliance closed for use.

With reference to the aforesaid figures, reference numeral 1 has been used to globally denote a cooking appliance according to the invention in its entirety. The cooking appliance 1 proposed here is particularly suitable for use in moving vehicles such as boats or camper vans, for example as a camping stove or for similar purposes.

The cooking appliance 1 has been designed to work with a fuel which can be used in doses or charges of a pre-set quantity which enable the cooking appliance to be used for a certain period of time in complete autonomy, without having to be connected to external sources of fuel.

For example the fuel used is a gelatinous, alcohol-based paste, for example bio-ethanol, or liquid alcohol or similar combustibles ensuring easy and safe combustion and, preferably easy storage, transport and disposal.

An example of gelatinous fuel which may be used with the cooking appliance according to the invention is described in the patent application WO 2004/016514.

According to a general embodiment, the cooking appliance 1 comprises a body-shell 10 having an upper side 12 defining the top of the cooking appliance and bearing a cooking hob 14. For example, the body-shell 10 is of such a size as to be easily transported or easily installed in vehicles such boats, camper vans or similar.

Inside the body-shell 10, below and at a distance from the upper side 12 of the cooking appliance, is a housing seat 16 designed to accommodate a fuel charge 18.

The cooking appliance 1 also comprises a burner 20 placed between the housing seat 16 of the fuel charge and the cooking hob 14.

The burner 20 comprises a plate-shaped element 22 positioned between the upper side of the cooking appliance 12 and the housing seat 16 for the fuel charge, so as to form a chamber 24 for mixing the air-fuel above the exposed surface 18' of the charge 18. In other words, the plate-shaped element 22 is positioned parallel and at a suitable distance from the exposed surface 18' of the charge 18.

According to a preferred embodiment, the plate-shaped element 22 of the burner 20 extends sufficiently to at least overlay the exposed surface of the fuel charge 18.

It has been experimented that for optimal combustion, such distance, which thus defines the height of the chamber 24, is between 3 and 6 mm, preferably between 4 and 5 mm.

The plate-shaped element 22 is perforated and from such hole a flame conductor pipe 26 extends in height to come out next to the cooking hob 14.

The upper side 12 of the cooking appliance 1 has an aperture 28 which surrounds the outlet 26' of the pipe 26 of the burner, so as to define with it a main entry passage 30 for the air supply to the mixing chamber 24.

According to one embodiment, the pipe 26 of the burner 20 has a cross-section with a smaller diameter than the exposed surface of the fuel charge, so as to produce a Venturi effect.

Preferably, the plate-shaped element 22, the pipe 26 and the aperture 28 of the upper side of the cooking appliance are co-axial with each other.

In addition, the extension of the aperture 28 in the upper side of the cooking appliance is smaller than the extension of the plate-shaped element, which means that the upper side 12 of the cooking appliance partially overlays the plate-shaped element 22 underneath.

According to one embodiment, the aperture 28 of the upper side 12 of the cooking appliance is circular, and the outlet 26' of the pipe 26 is of a diameter between about 30% and 50% of the diameter of said aperture 28. This allows optimal suction of the air from the outside to the inside of the cooking appliance and thus the formation of the correct oxygenated mixture for fuel combustion.

Advantageously, in addition, the pipe 26 of the burner tapers towards the outlet 26', for example by about 15°, so as to permit the formation of a further vortex which improves the thrust of the flame upwards.

Preferably, in addition, it has been experimented that the cooking appliance works better with a height of the pipe 26 essentially equal to its average diameter. It should be noted that the height of the pipe 26 also determines the distance between the seat 16 housing the charge 18 and the upper side 12 of the cooking appliance 1.

Without being bound by any theory of combustion, it has been experimented that such a structure and conformation of the cooking appliance 1 permits an optimal combustion, given that air suction system, through the calibrated inlet 30 made in the upper side of the cooking appliance, and the channelling below the plate-shaped element 22, permits the formation of an oxygenated mixture and therefore perfectly equilibrated combustion, without the formation of carbon monoxide. Surprisingly, the flame, which comes out of the pipe 26 of the burner 20, is continuous, uniform and tall.

According to a preferred embodiment, flow rate controls 31 of the flame are connected to the burner 20 which make it possible to adjust the flame from maximum to minimum and turn it off.

In a particularly advantageous embodiment, said flow rate controls 31 comprise a shutter element 32 which can be moved horizontally so as to adjust the cross-section of transit of the pipe 26.

The shutter element 2 can be rotated to a horizontal plane in relation to a pin 34 and is fitted with a manoeuvring lever 36 easily accessible from outside the body-shell 10 through a lateral slit 38.

According to one embodiment, the plate-shaped element 22 of the burner 20 comprises a pair of parallel discs 40 between which the shutter element 32 runs and is guided.

According to one embodiment, the burner 20 is attached to the upper side 12 of the body-shell 10 by means of spacer elements 42 which extend vertically from the plate-shaped element 22 and which screw onto said upper side 12.

One of said spacer elements 42, for example in the shape of a column, may form the rotation pin 34 of the shutter element 32.

In one embodiment of the cooking appliance 1, the cooking hob 14 comprises a pan support grid 46. In order to enable a uniform distribution of the flame on the bottom of the pans, it has been experimented that the pan support of the pans should be at a distance of 12-16 mm, preferably 14-15 mm, from the outlet 26' of the burner.

According to one advantageous embodiment, the body-shell 10 of the cooking appliance comprises a base 50 which the seat 16 housing the fuel charge 18 is made in, and a lid 52 bearing the burner 20 and the cooking hob 14. The lid 52 may be moved from the base 50 to enable easy access to the seat 16.

For example, the lid 52 is hinged to one side of the base 50.

In one embodiment, the gelatinous paste fuel 18 is available in tubs 60, such as that described in the aforesaid patent application WO 2004/016514. The relative seat 16 in the cooking appliance 1 is configured so as to contain at least one tub at a time safely, even in conditions of movement or inclination of the cooking appliance.

For example, given that, in one embodiment, the tub 60 has an annular edge 60' folded back externally, the seat 16 is composed of a circular hole made in a horizontal plane 62 parallel to the upper side 12 of the body-shell 10. The tub 60 is thus inserted in such hole and rests with its edge 60' on the horizontal plane 62.

The fuel charge is lit by bringing an ignition flame close to the exposed surface 18' for example by using a lighter if the lid 52 is raised in relation to the base 50 of the cooking appliance. Alternatively, even with the lid lowered it is possible to "dip" the tip of a taper into the fuel charge passing it through the burner, light the taper with an ignition flame, and place such ignition flame near the fuel charge by passing it through the pipe of the burner.

The intensity of the flame is efficiently regulated using the shutter element 32, which is also used to turn off the cooking appliance when cooking is complete.

Once the fuel charge has been used up, the lid 52 is raised, the empty tub removed and replaced with a new one.

The cooking appliance according to the invention, as well as the excellent combustion characteristics mentioned above, is therefore simple, safe and convenient to use.

A man skilled in the art may make modifications, adjustments and replacements of elements with others functionally equivalent to the embodiments of the cooking appliance described above so as to satisfy contingent requirements, while remaining within the scope of protection of following claims. Each of the characteristics described as belonging to a possible embodiment may be realised independently of the other embodiments described.

## Claims

1. Cooking appliance (1), comprising:
- a body-shell (10) having an upper side (12) defining the top of the cooking appliance and bearing a cooking hob (14);
- a housing seat (16) of a fuel charge (18), made inside said body-shell, underneath and at a distance from the upper side of the cooking appliance; and
- a burner (20) placed between the seat and cooking hob,
**characterised by** the fact that the burner comprises
a plate-shaped element (22) positioned between the upper side of the cooking appliance and the seat for the fuel charge, so as to form a chamber (24) for mixing the air-fuel above the exposed surface (18') of said charge, and
a conductor pipe of the flame (26) which extends in height from the plate-shaped element(22) as far as the cooking hob,
and by the fact that the upper side of the cooking appliance has an aperture (28) which surrounds the outlet (26') of the pipe (26) of the burner so as to define with it a main entry passage (30) for the air supplying the mixing chamber (24).

2. Cooking appliance (1) according to the previous claim, wherein the plate-shaped element (22) of the burner extends in size such as to overlay at least the exposed surface of the fuel charge.

3. Cooking appliance (1) according to claims 1 or 2, wherein the pipe of the burner has a smaller cross-section than the exposed surface of the fuel charge, so as to produce a Venturi effect.

4. Cooking appliance (1) according to any of the previous claims, wherein the plate-shaped element (22), the pipe (26) and the aperture (28) of the upper side of the cooking appliance are co-axial with each other.

5. Cooking appliance (1) according to any of the previous claims, wherein the extension of the aperture (28) in the upper side of the cooking appliance is smaller than the extension of the plate-shaped element (in other words, the upper side partially overlays the plate-shaped element).

6. Cooking appliance (1) according to any of the previous claims, wherein the aperture (28) of the upper side of the cooking appliance is circular, and wherein the outlet of the pipe (26) has a diameter of between 30% and 50% of the diameter of said aperture (28).

7. Cooking appliance (1) according to any of the previous claims, wherein the pipe (26) of the burner tapers towards the outlet.

8. Cooking appliance (1) according to any of the previous claims, wherein the pipe (26) is of a height essentially equal to its average diameter.

9. Cooking appliance (1) according to any of the previous claims, wherein the mixing chamber (24) is of a height between 3 to 6 mm, preferably from 4 to 5 mm.

10. Cooking appliance (1) according to any of the previous claims, wherein flow rate controls (31) of the flame are connected to the burner (209.

11. Cooking appliance (1) according to claim 10, wherein said flow rate controls (31) comprise a shutter element (32) which can be shifted horizontally so as to adjust the cross-section of transit of the pipe (26).

12. Cooking appliance (1) according to claim 11, wherein said shutter element (32) can be turned to a horizontal plane in relation to a pin (34) and is fitted with a manoeuvring lever (36) accessible from outside the body-shell (10) through a lateral slit (38).

13. Cooking appliance (1) according to claims 11 or 12, wherein the plate-shaped element (22) of the burner (20) comprises a pair of parallel discs (40) between which the shutter element (32) runs and is guided.

14. Cooking appliance (1) according to any of the previous claims, wherein the burner (20) is attached to the upper side (12) of the body-shell (10) by means of spacer elements (42) which extend vertically from the plate-shaped element (22) and screw on to said upper side (12).

15. Cooking appliance (1) according to any of the previous claims, wherein the cooking hob (14) comprises a pan support grid (46).

16. Cooking appliance (1) according to claim 15, wherein the pan support grid is at distance of 12-16 mm, preferably 14-15 mm, from the outlet of the burner.

17. Cooking appliance (1) according to any of the previous claims, wherein the body-shell (10) comprises a base (50) in which the seat (16) housing the fuel charge (18) is made, and a lid (52) bearing the burner and the cooking hob which can be moved in relation to the base (50) to enable access to the seat (16).

18. Cooking appliance (1) according to claim 17, wherein the lid (52) is hinged to one side of the base (50).

19. Cooking appliance (1) according to any of the previous claims, wherein the fuel charge (18) is composed of a gelatinous paste made from bio-ethanol or from liquid alcohol.

20. Cooking appliance (1) according to claim 19, wherein the fuel charge in gelatinous paste is contained in a tub (60) which can be inserted inside the housing seat (16).

21. Cooking appliance (1) according to claim 20, wherein said tub has an outward-folded, annular rim, and in which the seat (16) is composed of a circular hole made in a horizontal plane (62) parallel to the upper side (12) of the body-shell (10).
